# FASCICULE DE BREVET EUROPEEN

(11) **EP 2 297 063 B1**
(45) Date de publication et mention de la délivrance du brevet: **08.08.2018**
(21) Numéro de dépôt: 09784405.4
(22) Date de dépôt: 15.06.2009
(51) Int. Cl.: C04B 28/18, C04B 38/00, C10L 3/04, F17C 11/00

(54) **PROCÉDÉ D'ÉLABORATION D'UN STRUCTURE DE GARNISSAGE A HAUTES PERFORMANCES AVEC JEUX LATERAUX CONTROLES**
VERFAHREN ZUR HERSTLLUNG EINES HOCHLEISTUNG VERKLEIDUNGSSTRUKTURS MIT GESTEUERTEN SEITLICHEN SPIELRÄUMEN
METHOD FOR OBTAINING A HIGH-PERFORMANCE LINING STRUCTURE WITH CONTROLLED LATERAL CLEARANCES

(30) Priorité: 11.07.2008 FR 0854744
(43) Date de publication de la demande: 23.03.2011
(73) Titulaire: L'Air Liquide Société Anonyme pour l'Etude et l'Exploitation des Procédés Georges Claude, 75007 Paris (FR)
(72) Inventeur: DEL-GALLO, Pascal, F-91410 Dourdan (FR); BAUNE, Emmanuel, F - 95660 Maffliers (FR); CANTONNET, Jérôme, F-19100 Brive (FR); CHERNUKHO, Andrey, 220072 (BY)
(74) Mandataire: Laigneau, Amandine
(86) Numéro de dépôt international: PCT/FR2009/051129
(87) Numéro de publication internationale: WO 2010/004154

(56) Documents cités:
- EP-A- 0 264 550
- EP-A- 1 886 982
- EP-A- 1 887 275
- WO-A-98/29682
- US-A- 4 129 450
- US-A- 5 632 788

## Description

La présente invention a pour objet un procédé de fabrication des récipients présentant des structures de garnissage caractérisé en ce que l'étape de refroidissement après la synthèse hydrothermique est effectuée par pulvérisation d'eau à une température comprise entre 15 et 25°C sur au moins une partie de la périphérie du récipient de manière à ménager un jeu latéral discontinu ou continu entre la surface interne de l'enveloppe métallique du récipient et la surface externe de la masse de garnissage.

Il est connu d'utiliser des récipients sous pression contenant des gaz, tels que de l'acétylène, dissous dans un solvant, tel que de l'acétone, dans différentes applications médicales et artisanales, et notamment pour réaliser des opérations de soudage, brasage et chauffage en combinaison avec une bouteille d'oxygène.

Ces récipients sont habituellement garnis de matériaux de remplissages solides, destinés à stabiliser les gaz qu'ils contiennent, lesquels sont thermodynamiquement instables sous l'effet de variations de pression ou de température et donc susceptibles de se décomposer lors de leur stockage, leur transport et/ou leur distribution.

Ces matériaux doivent avoir une porosité suffisante pour faciliter l'adsorption et la libération des gaz contenus dans le récipient. Ils doivent également être incombustibles, inertes vis-à-vis de ces gaz et présenter une bonne résistance mécanique. Ces matériaux sont classiquement constitués de masses céramiques silicocalciques poreuses, obtenues par exemple à partir d'un mélange homogène dans l'eau de chaux vive ou de lait de chaux et de silice (notamment sous forme de farine de quartz), comme décrit dans les documents WO-A-93/16011, WO-A-98/29682, EP-A-262031, pour former une pâtée qui est ensuite soumise à une synthèse hydrothermique. Précisément, la pâtée est introduite dans le récipient à garnir, sous vide partiel, lequel est ensuite soumis à un autoclavage en pression et en température, puis à une cuisson dans un four pour éliminer complètement l'eau et former une masse solide monolithique de composition CaₓSi_{y}O_{z},w.H₂O_présentant des structures cristallines de type tobermorite et xonotlite, avec une présence éventuelle résiduelle de quartz. Divers additifs peuvent être ajoutés à ces mélanges de l'art antérieur pour améliorer la dispersion de la chaux et de la silice et éviter ainsi la formation d'inhomogénéités structurales et les phénomènes de retrait observés lors du durcissement de la masse poreuse. Les matériaux de remplissage obtenus doivent en effet présenter une porosité homogène sans espaces vides dans lesquels des poches de gaz pourraient s'accumuler et entraîner des risques d'explosion.

Le document EP-A-264550 indique en outre qu'une masse poreuse contenant au moins 50%, voire au moins 65%, voire même au moins 75% en poids de phase cristalline (par rapport au poids de silicate de calcium) permet de satisfaire à la double exigence de résistance à la compression et au retrait aux températures de synthèse hydrothermique et de cuisson.

Si les masses poreuses connues sont globalement satisfaisantes sur le plan de leur résistance mécanique, il n'en demeure pas moins que les propriétés de soutirage des gaz piégés dans ces masses poreuses sont à ce jour insuffisantes et/ou totalement aléatoires. Cet aspect aléatoire est lié à la non maîtrise/compréhension du procédé et notamment de l'étape de synthèse hydrothermique par contrôle des paramètres opératoires.

En effet, selon les conditions opératoires (température d'utilisation, débit de travail, quantité de gaz contenu dans la bouteille...), elles ne permettent pas toujours de soutirer le gaz qu'elles renferment en continu, à un débit élevé, pendant toute la durée nécessaire à certaines applications, notamment de soudage, avec un taux de restitution de gaz maximal, correspondant au rapport de la quantité de gaz utilisable à la quantité de gaz initialement stockée. Or, il serait souhaitable de pouvoir satisfaire à un débit de 200 1/h en continu pendant 15 mn et à un débit de pointe de 400 1/h pendant 4 mn, pour un taux de contenance en gaz supérieur ou égal à 50% au démarrage de l'essai (défini comme le rapport de la quantité de gaz présente à cet instant à la quantité de gaz initialement chargée dans le récipient), le récipient ayant un rapport diamètre/longueur compris entre 0,2 et 0,7, de préférence entre 0,35 et 0,5, pour une capacité en eau minimale de un litre et de préférence comprise entre 3 et 10 litres.

Cette insuffisance est notamment liée à la déperdition thermique associée à l'extraction du gaz hors du solvant qui peut s'avérer très préjudiciable au soutirage du gaz. Cette déperdition thermique n'est pas liée principalement à la conductivité intrinsèque du matériau silico-calcaire (pour mémoire le taux de vide est compris entre 87-92%) mais à la taille des aiguilles (dimensions) constituant la masse poreuse. En effet plus celles-ci sont de petite taille plus le nombre de points de contacts entre elles est élevé. Ceci défavorise alors le transfert de chaleur par conduction aboutissant à une durée plus ou moins longue « d'indisponibilité de la bouteille ». Cet effet est à corréler avec la distribution poreuse. Dans le cas d'une bouteille d'acétylène, par exemple, la consommation énergétique est de l'ordre de 600 Joules par gramme d'acétylène extrait du solvant. En pratique, il en résulte un refroidissement important de la bouteille au cours du soutirage, entraînant une plus grande solubilisation de l'acétylène dans le solvant et ainsi une baisse de pression se répercutant sur le débit de soutirage. Le débit finit par s'épuiser lorsque la pression en sortie de bouteille passe en deçà de la pression atmosphérique.

On observe donc localement, au sein d'une bouteille d'acétylène et au cours de sa vidange, de fortes hétérogénéités de (a) température, (b) pression et (c) taux de chargement, qui se définit comme la quantité d'acétylène dissoute par gramme de solvant. Ces hétérogénéités constituent l'inconvénient majeur des bouteilles actuelles d'acétylène, néfaste à leur utilisation optimale.

En pratique et d'un point de vue général, les phénomènes néfastes observés sur une bouteille de l'art antérieur sont les suivants:
- La bouteille se refroidit plus lors d'un long soutirage. On constate des écarts relatifs de température pouvant atteindre - 40°C par rapport à la température initiale de la bouteille qui est la température ambiante. Il y a alors risque d'apparition d'acétylène liquide.
- Le débit s'épuise d'autant plus vite que la température ambiante d'utilisation de la bouteille est basse, la pression de la solution solvant / acétylène étant elle-même plus basse. La capacité de la bouteille à débiter sur une période longue peut donc se trouver particulièrement limitée en hiver ou dans des régions au climat froid.
- Le débit s'épuise d'autant plus vite que le débit de travail réglé est important par rapport au volume de la bouteille.
- Les propriétés de pression et de température se dégradent en priorité près de l'ogive, c'est-à-dire à l'endroit de la bouteille où les phénomènes de migration de l'acétylène hors du solvant sont les plus importants.
- On observe un écart de pression allant jusqu'à 4 bar entre haut et bas de la bouteille lors du soutirage. Ces écarts de pression s'exercent sur des sections importantes, conduisant à des contraintes mécaniques pouvant être à l'origine de la dégradation de la garniture au fil du temps.
- Le fond se refroidit plus lentement (allant jusqu'à un décalage de 3-4h).

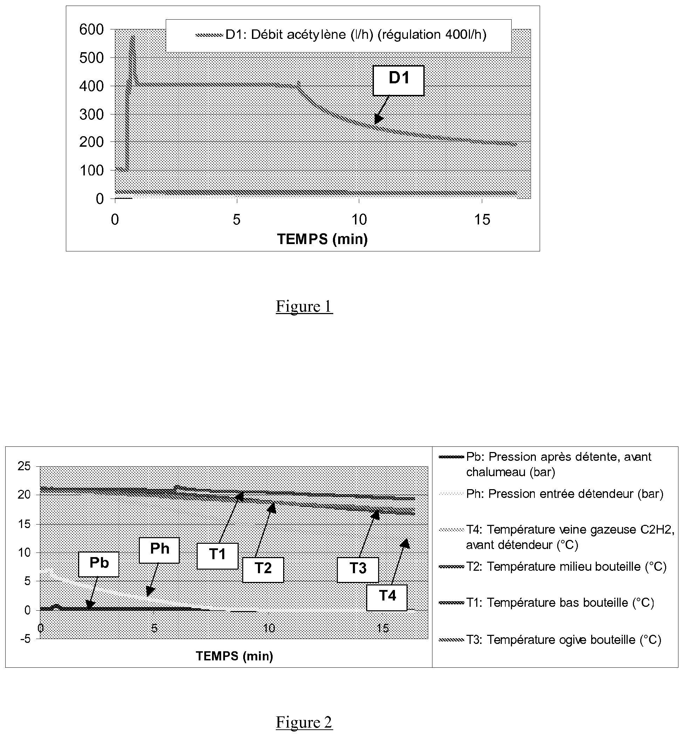

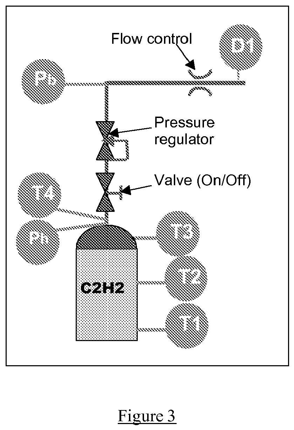

Ces phénomènes sont illustrés sur les Figures 1 et 2, pour une bouteille « A » de volume en eau de 5.8 litres, apte à contenir 800 litres d'acétylène mais chargée à seulement 38% et utilisée à 20°C, garnie au moyen d'une garniture cohérente silico-calcaire dont le D50 est de 0.36µm et le D95, de 0.42µm, et pour laquelle le débit est régulé à 400 litres/h. L'évolution de la courbe de débit sur la Figure 1 indique que le débit s'épuise après 6.5 min d'utilisation, soit après que seulement 15% du gaz initialement contenu ait été soutiré. On distingue la pression Ph qui la pression à l'entrée du détendeur et la pression Pb qui est la pression après détente par exemple avant chalumeau. L'évolution de Ph, pression mesurée à la sortie de la bouteille avant le détendeur (Figure 3), indique que celle-ci est le moteur du soutirage de l'acétylène : aux pertes de charge dans le circuit prêt, lorsque Ph devient égale à Pb, le débit en acétylène chute. Le suivi en température sur la paroi de la bouteille indique que la température baisse d'abord au niveau du sommet de la bouteille avant le bas de celle-ci. De plus, on confirme que la chute de pression accompagne la chute en température de la bouteille en cours d'essai.

En outre, les variations de température et de pression ne sont pas homogènes au sein du récipient, ce qui peut conduire à l'apparition de contraintes mécaniques susceptibles de dégrader la masse poreuse au cours du temps.

Aux difficultés de soutirage s'ajoutent donc des problèmes de résistance mécanique susceptibles d'avoir des répercussions sur la sécurité.

Partant de là, un problème qui se pose est de fournir un récipient renfermant une structure de garnissage présentant des propriétés de soutirage satisfaisantes et des propriétés mécaniques permettant de répondre au souci de sécurité, et un procédé permettant la fabrication d'une tel récipient.

Une solution de l'invention est un procédé d'élaboration d'un récipient renfermant une structure de garnissage comprenant une phase cristalline renfermant de 55 à 97 % en poids de cristallites de xonotlite, de 3 à 45% en poids de cristallites de tobermorite, moins de 15% en poids d'intermédiaires de formule CaₓSi_{y}O_{z},w.H₂O avec 1< x <16, 1< y < 24, 4< z < 60 et 1< w < 18, dont moins de 5% en poids de CaCO₃, et moins de 5% en poids de SiO₂, ladite structure de garnissage étant homogène et ledit récipient présentant un jeu latéral discontinu ou continu entre la surface interne de son enveloppe métallique et la surface externe de la structure de garnissage, caractérisé en ce qu'il comprend les étapes suivantes :
a) une étape de synthèse hydrothermique de la masse de garnissage effectuée à partir d'un mélange de chaux vive et de silice,
b) une étape d'introduction de la masse de garnissage issue de l'étape a) dans un récipient comprenant une enveloppe métallique,
c) une étape de refroidissement de la masse de garnissage issue de l'étape b) par pulvérisation d'un liquide ou d'un gaz pris à une température comprise entre 15 et 25°C sur au moins une partie de la périphérie du récipient pendant une durée comprise entre 30 secondes et 10 minutes de manière à ménager un jeu latéral discontinu ou continu entre la surface interne de l'enveloppe métallique et la surface externe de la masse de garnissage.
d) une étape de séchage de la masse de garnissage issue de l'étape c).

Par « homogène », on entend que différents prélèvements effectués localement en différents points de la structure de garnissage (par exemple en haut au centre, en bas au centre, au coeur de la masse, au centre le long de la paroi métallique...) donnent lieu à des résultats d'analyse (diffraction X, porosité, distribution en taille des pores) homogènes, c'est-à-dire que chaque donnée quantitative mesurée ne diffère pas de plus de 10% d'une zone à une autre.

Ce caractère « homogène » est important car il conditionne l'homogénéité de la solution solvant-acétylène dans le cas d'une bouteille d'acétylène, et par conséquent l'uniformité des taux de chargement locaux sur l'ensemble du volume du récipient renfermant la structure de garnissage. Si la microstructure n'est pas homogène au sein de la masse, des excès de pression se créent localement dans des zones où le taux de chargement est supérieur au taux de chargement nominal de la bouteille. Par exemple, des simulations ont montré qu'à 35°C, la pression d'une bouteille pouvait être décalé de 22.3 bar à 24 bar en prenant comme hypothèse un taux de chargement de 30% supérieur au taux de chargement nominal pour 1/3 du volume de la masse.

La xonotlite est une silicate de calcium de formule Ca₆Si₆O₁₇(OH)₂, qui présente des unités répétitives constituées de trois tétraèdres. Par ailleurs, la tobermorite est également un silicate de calcium, de formule Ca₅Si₆(0,OH)₁₈.5H₂O, cristallisé sous forme orthorhombique.

Le mécanisme de formation de la xonotlite le plus généralement accepté à partir des précurseurs CaO et SiO₂ dans le rapport molaire CaO/SiO₂ de 1 environ avec l'eau utilisée comme solvant est le suivant :

CaO / SiO₂ / H₂O → Ca(OH)₂ / SiO₂ / H₂O → Gel C-S-H → tobermorite → xonotlite

L'ensemble des phases intermédiaires représente de préférence de 0 à 10% et plus préférentiellement de 0 à 5% du poids de la phase cristalline présente dans la structure de garnissage.

Le carbonate de calcium et la silice représente chacun de préférence moins de 3% du poids total de ces phases cristallines.
De préférence :
- les cristallites sont sous forme d'aiguilles enchevêtrées les unes aux autres,
- la structure de garnissage renferme au moins 70% en poids de phase cristalline,
- les cristallites sont liés les uns aux autres de façon à ménager entre elles un diamètre de pore D95 (diamètre auquel 95% en volume des pores ont un diamètre inférieur) supérieur ou égal à 0,4 µm et inférieur à 5 µm et un diamètre moyen de pore D50 (diamètre auquel 50% en volume des pores ont un diamètre inférieur) supérieur ou égal à 0,4 µm et inférieur à 1,5 µm. La structure de garnissage a de ce fait avantageusement une porosité ouverte totale comprise entre 80% et 90%. Ces valeurs peuvent toutes être mesurées par porosimétrie au mercure ;
- ladite structure de garnissage présente une résistance à la compression supérieure à 15kg/cm², soit 1,5 MPa. Sa résistance est préférentiellement supérieure à 20 kg/cm², soit 2 MPa ;
- ladite structure de garnissage présente un coefficient de porosité k pouvant être compris entre 0,1.10⁻¹⁴m² et 0,7.10⁻¹⁴m², de préférence entre 0,2.10⁻¹⁴m² et 0,5.10⁻¹⁴m².

Selon le cas, le procédé selon l'invention peut présenter l'une des caractéristiques suivantes :
- l'étape de refroidissement est telle que le jeu latéral continu ou discontinu est de largeur comprise entre 0,001 mm et 0,1 mm, de préférence entre 0,001 et 0,05 mm.
- à l'étape c) la pulvérisation d'eau s'effectue sur toute la périphérie du récipient de manière à ménager un jeu latéral continu entre l'ensemble de la surface interne de l'enveloppe métallique et l'ensemble de la surface externe de la masse de garnissage.
- avant l'étape b) d'introduction de la masse de garnissage on applique un produit de revêtement dégradable lors de l'étape de séchage sur l'ensemble de la surface interne de l'enveloppe métallique du récipient de manière à faciliter l'aménagement du jeu latéral.
- l'étape a) de synthèse hydrothermique comprend :
   (i) une sous-étape de montée en température, sur une durée inférieure à 10h, d'un mélange initial de chaux vive et de silice à une température T1 comprise entre 150 et 300°C,
   (ii) une sous-étape de fabrication de la masse de garnissage effectuée :
      - à partir du mélange de chaux vive et de silice issu de l'étape (i),
      - à une température T1 comprise entre 150 et 300°C,
      - à une pression P1 comprise entre 5.10⁵ Pa et 25.10⁵ Pa, et
      - pendant une durée comprise entre 10h et 70h ;
- la chaux vive est obtenue par calcination à une température d'au moins 850°C pendant au moins une heure de pavés de calcaire tels qu'au moins 90% en poids ont des dimensions de 1 à 15 mm, ledit calcaire ayant une pureté d'au moins 92% en poids et une porosité ouverte allant de 0 à 25%.
- l'étape de séchage est réalisée à une température de 300 à 450°C.

La résistance mécanique à la compression peut être mesurée par prélèvement d'un cube de 100 x 100 mm² dans la structure de garnissage et application sur la face supérieure de celui-ci d'une force en pression tandis qu'elle est maintenue contre une plaque métallique horizontale. Cette force correspond à la pression (en kg/cm² ou MPa) à partir de laquelle la matière commence à se fissurer.

Le recours à une structure de garnissage selon l'invention permet d'atteindre le débit de soutirage recherché tout en satisfaisant aux exigences requises en matière de sécurité et de résistance mécanique.

Outre la phase cristalline décrite précédemment, la structure de garnissage selon l'invention peut comprendre des fibres choisies parmi les fibres synthétiques à base de carbone, telles que décrites notamment dans le document US-A-3,454,362, les fibres de verre alcalino-résistantes, telles que décrites notamment dans le document US-A-4,349,643, les fibres de cellulose partiellement délignifiées, telles que décrites notamment dans le document EP-A-262031, et leurs mélanges, sans que cette liste ne soit limitative. Ces fibres sont utiles notamment en tant que matériaux de renfort, pour améliorer la résistance aux chocs de la structure de garnissage, et permettent également d'éviter les problèmes de fissuration au séchage de la structure. Ces fibres peuvent être utilisées telles quelles ou après traitement de leur surface.

La structure de garnissage peut en outre inclure des agents dispersants et/ou des liants, tels que les dérivés de cellulose, en particulier la carboxyméthylcellulose, l'hydroxypropylcellulose ou l'éthylhydroxyéthylcellulose, des polyéthers, tels que le polyéthylène glycol, des argiles synthétiques de type smectite, de la silice amorphe de surface spécifique avantageusement comprise entre 150 et 300 m²/g, et leurs mélanges, sans que cette liste ne soit limitative.

De préférence, la structure de garnissage contient des fibres, en particulier des fibres de carbone et/ou de verre et/ou de cellulose. La quantité de fibres est avantageusement inférieure à 55% en poids, par rapport à l'ensemble des précurseurs solides mis en oeuvre dans le procédé de fabrication de la structure de garnissage. Elle est de préférence comprise entre 3 et 20% en poids.

Le récipient est caractérisé en ce qu'il présente un jeu latéral discontinu ou continu entre la surface interne de son enveloppe métallique et la surface externe de la structure de garnissage. Le jeu latéral continu ou discontinu est de largeur comprise entre 0,001 mm et 0,1 mm, de préférence entre 0,001 et 0,05 mm.

Le récipient comprend habituellement une enveloppe métallique renfermant la structure de garnissage décrite précédemment. L'enveloppe métallique peut être constituée d'un matériau métallique tel que l'acier, par exemple un acier à carbone normalisé P265NB selon la norme NF EN10120, dont l'épaisseur le rend apte à résister au moins à la pression de synthèse hydrothermique sans risque d'accident et apte à résister à une pression d'épreuve de 60 bar (6 MPa), valeur normative réglementaire pour le conditionnement de l'acétylène dans les conditions décrites précédemment. Le récipient est en outre habituellement de forme cylindrique et généralement pourvu de moyens de fermeture et d'un régulateur de pression. Ce récipient a de préférence un rapport diamètre / longueur compris entre 0,2 et 0,7, plus préférentiellement entre 0,35 et 0,5, et une capacité en eau minimale d'un litre. Habituellement, un tel récipient aura la forme d'une bouteille.

Les fluides stockés dans la structure de garnissage selon l'invention peuvent être des gaz ou des liquides.

Comme gaz, on peut citer les gaz comprimés purs ou en mélanges sous forme gazeuse ou liquide, tels que l'hydrogène, les hydrocarbures gazeux (alcanes, alcynes, alcènes), l'azote et l'acétylène, et les gaz dissous dans un solvant tels que l'acétylène et les mélanges acétylène-éthylène ou acétylène-éthylène-propylène, dissous dans un solvant tel que l'acétone ou le diméthylformamide (DMF).

Comme liquides, on peut notamment citer les précurseurs organométalliques tels que les précurseurs de Ga et In, utilisés en particulier dans l'électronique, ainsi que la nitroglycérine.

En particulier, le récipient selon l'invention contient de l'acétylène dissous dans du DMF ou de l'acétone.

Par « pureté », on entend le pourcentage en poids de carbonate de calcium dans le calcaire.

L'homme du métier saura identifier les carrières ou veines exploitées permettant l'obtention des pavés de calcaire précités.

Le type de structure de garnissage selon l'invention est tout d'abord la conséquence de la préparation d'une chaux vive ayant une réactivité satisfaisante et apte à former, après synthèse hydrothermique, le matériau aciculaire recherché. La deuxième étape du procédé consiste à mélanger la chaux vive à de la silice, qui peut être amorphe ou cristalline, selon un rapport molaire CaO:SiO₂ de 0,8 à 1. En outre, le ratio eau/précurseurs solides (chaux + silice) est de préférence compris entre 2 et 60, plus préférentiellement entre 3 et 25.

Le mélange est ensuite introduit dans les récipients à garnir et soumis à une synthèse hydrothermique. Pour être aboutie, la synthèse hydrothermique doit être effectuée :
- à une température de synthèse hydrothermique T1 pouvant être comprise entre 150 et 300°C, préférentiellement entre 180 et 250°C,
- à une pression comprise entre 5.10⁵ Pa et 25.10⁵ Pa (5 et 25 bars), préférentiellement entre 7.10⁵ Pa et 15.10⁵ Pa (7 et 15 bars). Selon une première forme d'exécution, la synthèse peut être réalisée en introduisant le mélange dans le récipient ouvert qu'elle est destinée à garnir, puis en plaçant celui-ci dans un four autoclave soumis à la pression décrite précédemment. Selon une deuxième forme d'exécution, la synthèse hydrothermique peut être réalisée en plaçant le mélange dans le récipient qu'elle est destinée à garnir, en fermant celui-ci avec un bouchon équipé d'un système de régulation de pression (tel qu'une valve), en pressurisant le récipient à une pression allant de la pression atmosphérique aux pressions précédemment décrites, puis en plaçant ce récipient dans un four non pressurisé.
- pendant une durée allant, selon le volume du récipient à garnir, de 10h à 70h, par exemple voisine de 40 heures pour un récipient de volume en eau égal à 6 litres.
- La montée en température à T₁ doit se faire sur une durée inférieure à 10h, de préférence inférieure à 2h. Lorsque plusieurs récipients garnis de matière de garnissage sont enfournées au sein d'un même, ce paramètre définit en fait le positionnement des bouteilles les unes par rapport aux autres, puisque la circulation d'air entre les bouteilles dépend fortement du nombre et de la position des bouteilles enfournées en regard de la circulation d'air chauffé à l'intérieur du four de synthèse. Il est nécessaire de limiter ces variations sur le temps de montée en température, puisque ce paramètre impacte directement également sur la vitesse de cristallisation des aiguilles des composés de type CaₓSi_{y}O_{z},w.H₂O formés.

Une étape intermédiaire à ce stade du procédé peut consister à refroidir brutalement les bouteilles par une trempe.

Cette étape intermédiaire sera suivie d'une étape de « redescente » à température ambiante de la structure de garnissage.

Enfin, l'étape de séchage a pour fonction non seulement d'évacuer l'eau résiduelle, mais aussi de conférer à la masse traitée une structure majoritairement cristalline. Cette opération est réalisée dans un four traditionnel électrique (le même ou non que celui utilisé pour l'opération de synthèse hydrothermique), à la pression atmosphérique, c'est-à-dire après que les bouchons et valves aient été retirés du sommet des récipients après synthèse hydrothermique dans le second exemple de synthèse hydrothermique décrit auparavant.

L'extraction du gaz hors du solvant au sein duquel il est dissous dans la garniture céramique qui remplit le récipient est régi par trois facteurs déterminants qui dépendent directement des caractéristiques suivantes de la bouteille :
(a) la perméabilité intrinsèque de la garniture céramique, qui définit une résistance au flux des molécules de gaz désorbées du solvant pour atteindre le col de la bouteille où le gaz est libéré. Ce premier paramètre est contrôlé par la microstructure de la garniture (type de la porosité et taille des particules la constituant) ;
(b) la perméabilité globale du récipient à gaz ;
(c) la formulation chimique du matériau principal constituant la garniture et en particulier sa conductivité thermique lorsqu'elle se trouve chargée en solvant, qui définit sa capacité à véhiculer la quantité de frigories générées au moment de l'extraction du gaz hors du solvant.

Or, la perméabilité globale du récipient à gaz dépend d'une part de la perméabilité intrinsèque de la garniture céramique et d'autre part de l'existence de jeux latéraux entre la surface interne de l'enveloppe métallique du récipient et la surface externe de la masse poreuse céramique.

De là, une étape essentielle du procédé d'élaboration d'un récipient selon l'invention est d'effectuer un choc thermique sur le récipient tel qu'une douche ou une trempe entre l'étape de synthèse hydrothermique et l'étape de séchage.
Il peut également s'agir d'une étape qui consiste à revêtir les parois internes de la bouteille d'un revêtement dégradable au cours de l'opération de séchage qui créerais ce retrait

Il peut également s'agir d'une étape qui consiste à faire un traitement mécanique sur la bouteille (choc ou vibration imposé au récipient par un heurt de la partie basse de celui-ci sur le sol, cette opération pouvant être réalisée « à la main » et de manière individuelle par bouteille, ou encore collectivement sur un groupe de récipients en utilisant un moyen de manutention mécanisé) pour décoller la matière poreuse de la paroi métallique.

Cette étape permet de créer des jeux latéraux (décollements) entre les parois internes du récipient et les surfaces externes de la masse céramique de garnissage, compensant ainsi un éventuel manque de perméabilité intrinsèque de la masse pour favoriser les performances en restitution de gaz. Autrement dit, la solution proposée permet de contrebalancer le fait qu'une masse de garnissage présente une taille de pores restreinte, gênant traditionnellement le processus de remplissage/ d'extraction de gaz.

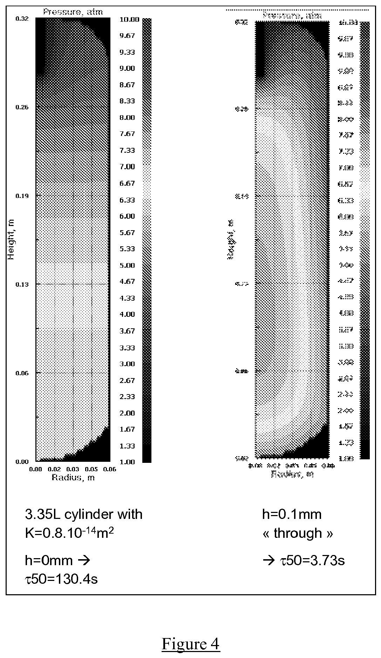

L'invention réside sur le fait que l'étape intermédiaire de refroidissement par douche ou trempe (ou revêtement, ou choc thermique ou mécanique) à réaliser entre l'étape de synthèse hydrothermique et celle de séchage permet un changement du mode de filtration, en passant d'un mode de filtration axiale (sans douche) et à un mode filtration radial (selon l'invention). Ce principe est illustré sur la Figure 4 qui montre les gradients de pression modélisés pour deux bouteilles extrême, la première réalisée selon l'art antérieur (sans étape intermédiaire) et la seconde selon l'invention (avec étape intermédiaire) pour représenter les deux modes correspondants de filtration, axial ou radial, dans les deux cas pour une bouteille de volume 3.35 litres dont la masse poreuse a un coefficient de perméabilité intrinsèque *k* de 0.8.10⁻¹⁴ m². Expérimentalement ces différences ont été vérifiées par des tests de perméabilité à l'azote, qui consistaient à mesurer le temps de demie vidange t₅₀ de l'azote préalablement introduit au sein de ces bouteilles. Dans le premier cas où aucun jeu latéral n'existait (h=0mm), ce temps caractéristique était de 130 secondes, alors qu'il n'était que de 3.7 secondes dans le second cas (jeu latéral continu de 0.1mm).

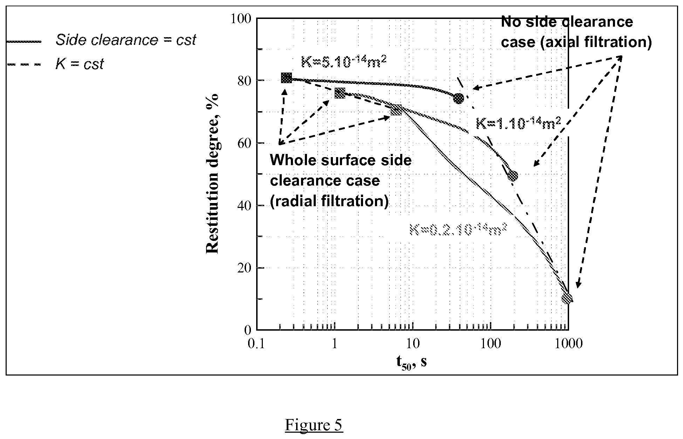

Pour un cas non extrême non représenté où un jeu latéral continu sur l'ensemble de la périphérie du récipient de 0.025mm est obtenu et pour lequel le coefficient *k* de la masse de garnissage est de 0.8.10⁻¹⁴ m², la valeur de t₅₀ est de 73 secondes. Ce cas correspond alors à un taux de restitution en gaz, pour une bouteille de volume de 5.8 litres et pour une valeur habituelle du taux de chargement, d'environ 60%, selon la représentation de la Figure 5. Pour un autre cas où un jeu latéral de 0.025mm sur les parois uniquement est obtenu et pour une valeur de *k* de 0.8.10⁻¹⁴ m², la valeur de t₅₀ est de 102 secondes. Dans ce cas le taux de restitution en gaz n'est que d'environ 45%, selon la représentation de la Figure 5. Ces résultats et plus généralement la représentation de la Figure 5 permettent de montrer que le taux de restitution en gaz d'un récipient garni selon l'invention dépend de la perméabilité globale du récipient à gaz, qui dépend de la perméabilité intrinsèque de la garniture céramique, mais également de l'existence de jeux latéraux entre la surface interne de la tôlerie et la surface externe de la masse poreuse céramique. Par exemple, la Figure 5 indique qu'un même taux de restitution en gaz peut être obtenu à partir de plusieurs récipients montrant des paramètres temps de demie-vidange t₅₀ et coefficient de porosité k différents. Aussi, différents taux de restitution en gaz peuvent être obtenus à partir de différents récipients montrant différents *k* et jeux latéraux, bien que leurs perméabilités globales soient identiques (même t₅₀).

L'invention ici proposée permet donc d'obtenir :
- une autonomie ou un taux de restitution (défini par la quantité de gaz utilisable par rapport à la quantité de gaz initialement stockée au démarrage du soutirage) plus importante à volume de bouteille donné ;
- outre une utilisation de la bouteille facilitée en soutirage, un remplissage plus rapide en centre de conditionnement, grâce à un passage plus aisé de l'acétone et du gaz de remplissage au sein de la garniture ; et
- une garantie de performances en sécurité (test normatif d'inflammation).

## Revendications

1. Procédé d'élaboration d'un récipient renfermant une structure de garnissage comprenant une phase cristalline renfermant de 55 à 97 % en poids de cristallites de xonotlite, de 3 à 45% en poids de cristallites de tobermorite, moins de 15% en poids d'intermédiaires de formule CaₓSi_{y}O_{z},w.H₂O avec 1<x<16, 1<y<24, 4<z<60 et 1<w<18, dont moins de 5% en poids de CaCO₃, et moins de 5% en poids de SiO₂ , ladite structure de garnissage étant homogène et ledit récipient présentant un jeu latéral discontinu ou continu entre la surface interne de son enveloppe métallique et la surface externe de la structure de garnissage, **caractérisé en ce qu'**il comprend les étapes suivantes :
a) une étape de synthèse hydrothermique de la masse de garnissage effectuée à partir d'un mélange de chaux vive et de silice,
b) une étape d'introduction de la masse de garnissage issue de l'étape a) dans un récipient comprenant une enveloppe métallique,
c) une étape de refroidissement de la masse de garnissage issue de l'étape b) par pulvérisation d'un liquide ou d'un gaz pris à une température comprise entre 15 et 25°C sur au moins une partie de la périphérie du récipient pendant une durée comprise entre 30 secondes et 10 minutes de manière à ménager un jeu latéral discontinu ou continu entre la surface interne de l'enveloppe métallique et la surface externe de la masse de garnissage.
d) une étape de séchage de la masse de garnissage issue de l'étape c).

2. Procédé selon la revendication 1, **caractérisé en ce que** l'étape de refroidissement est telle que le jeu latéral continu ou discontinu est de largeur comprise entre 0,001 mm et 0,1 mm, de préférence entre 0,001 et 0,05 mm.

3. Procédé selon l'une des revendications 1 ou 2, **caractérisé en ce qu'**à l'étape c) la pulvérisation d'eau s'effectue sur toute la périphérie du récipient de manière à ménager un jeu latéral continu entre l'ensemble de la surface interne de l'enveloppe métallique et l'ensemble de la surface externe de la masse de garnissage.

4. Procédé selon l'une des revendications 1 à 3, **caractérisé en ce qu'**avant l'étape b) d'introduction de la masse de garnissage on applique un produit de revêtement dégradable lors de l'étape de séchage sur l'ensemble de la surface interne de l'enveloppe métallique du récipient de manière à faciliter l'aménagement du jeu latéral.

5. Procédé selon l'une des revendications 1 à 4, **caractérisé en ce que** l'étape a) de synthèse hydrothermique comprend :
(i) une sous-étape de montée en température, sur une durée inférieure à 10h, d'un mélange initial de chaux vive et de silice à une température T1 comprise entre 150 et 300°C,
(ii) une sous-étape de fabrication de la masse de garnissage effectuée :
- à partir du mélange de chaux vive et de silice issu de l'étape (i),
- à une température T1 comprise entre 150 et 300°C,
- à une pression P1 comprise entre 5.10⁵ Pa et 25.10⁵ Pa, et
- pendant une durée comprise entre 10h et 70h ;

6. Procédé selon l'une des revendications 1 à 5, **caractérisé en ce que** la chaux vive est obtenue par calcination à une température d'au moins 850°C pendant au moins une heure de pavés de calcaire tels qu'au moins 90% en poids ont des dimensions de 1 à 15 mm, ledit calcaire ayant une pureté d'au moins 92% en poids et une porosité ouverte allant de 0 à 25%.

7. Procédé selon l'une des revendications 1 à 6, **caractérisé en ce que** l'étape de séchage est réalisée à une température de 300 à 450°C.

## Patentansprüche

1. Verfahren zur Herstellung eines Behältnisses, das eine Verkleidungsstruktur enthält, umfassend eine kristalline Phase, die 55 bis 97 Gew.-% Xonotlit-Kristallite, 3 bis 45 Gew.-% Tobermorit-Kristallite, weniger als 15 Gew.-% Zwischenprodukte mit der Formel CaₓSi_{y}O_{Z},w.H₂O mit 1<x<16, 1<y<24, 4<z<60 und 1<w<18 enthält, davon weniger als 5 Gew.-% CaCO₃ und weniger als 5 Gew.-% SiO₂, wobei die Verkleidungsstruktur homogen ist und das Behältnis einen diskontinuierlichen oder kontinuierlichen seitlichen Spielraum zwischen der Innenfläche seines Metallgehäuses und der Außenfläche der Verkleidungsstruktur aufweist, **dadurch gekennzeichnet, dass** es die folgenden Schritte umfasst:
a) einen Schritt der hydrothermalen Synthese der Verkleidungsmasse, der aus einer Mischung von Branntkalk und Kieselsäure erfolgt,
b) einen Schritt des Einbringens der Verkleidungsmasse aus Schritt a) in ein Behältnis, das ein Metallgehäuse umfasst,
c) einen Schritt des Abkühlens der Verkleidungsmasse aus Schritt b) durch Aufsprühen einer bei einer Temperatur zwischen 15 und 25°C aufgenommenen Flüssigkeit oder eines Gases auf mindestens einen Teil des Umfangs des Behältnisses für einen Zeitraum zwischen 30 Sekunden und 10 Minuten, um einen diskontinuierlichen oder kontinuierlichen seitlichen Spielraum zwischen der Innenfläche des Metallgehäuses und der Außenfläche der Verkleidungsmasse zu ermöglichen.
d) einen Schritt des Trocknens der Verkleidungsmasse aus Schritt c).

2. Verfahren nach Anspruch 1, **dadurch gekennzeichnet, dass** der Schritt des Abkühlens derart erfolgt, dass der kontinuierliche oder diskontinuierliche seitliche Spielraum eine Breite in einem Bereich zwischen 0,001 mm und 0,1 mm, vorzugsweise zwischen 0,001 und 0,05 mm, aufweist.

3. Verfahren nach einem der Ansprüche 1 oder 2, **dadurch gekennzeichnet, dass** in Schritt c) Wasser derart über den gesamten Umfang des Behältnisses gesprüht wird, dass ein kontinuierlicher seitlicher Spielraum zwischen der gesamten Innenfläche des Metallgehäuses und der gesamten Außenfläche der Verkleidungsmasse besteht.

4. Verfahren nach einem der Ansprüche 1 bis 3, **dadurch gekennzeichnet, dass** vor Schritt b) des Einbringens der Verkleidungsmasse ein abbaubares Beschichtungsprodukt während des Trocknungsschritts auf die gesamte Innenfläche des Metallgehäuses des Behältnisses aufgebracht wird, um die Anordnung des seitlichen Spielraums zu erleichtern.

5. Verfahren nach einem der Ansprüche 1 bis 4, **dadurch gekennzeichnet, dass** der Schritt a) der hydrothermalen Synthese Folgendes umfasst:
(i) einen Teilschritt der Erhöhung der Temperatur einer Ausgangsmischung von Branntkalk und Kieselsäure über einen Zeitraum von weniger als 10 Stunden bei einer Temperatur T1 in einem Bereich zwischen 150 und 300°C,
(ii) ein Teilschritt der Herstellung der erzeugten Verkleidungsmasse:
- aus der Mischung von Branntkalk und Kieselsäure aus Schritt (i),
- bei einer Temperatur T1 in einem Bereich zwischen 150 und 300°C,
- mit einem Druck P1 in einem Bereich zwischen 5.10⁵ Pa und 25.10⁵ Pa,
und
- für einen Zeitraum zwischen 10 Stunden und 70 Stunden;

6. Verfahren nach einem der Ansprüche 1 bis 5, **dadurch gekennzeichnet, dass** der Branntkalk durch Kalzinieren bei einer Temperatur von mindestens 850°C für mindestens eine Stunde aus Kalksteinblöcken erhalten wird, so dass mindestens 90 Gew.-% Abmessungen von 1 bis 15 mm aufweisen, wobei der Kalkstein eine Reinheit von mindestens 92 Gew.-% und eine offene Porosität im Bereich von 0 bis 25 % aufweist.

7. Verfahren nach einem der Ansprüche 1 bis 6, **dadurch gekennzeichnet, dass** der Schritt des Trocknens bei einer Temperatur zwischen 300 und 450°C ausgeführt wird.

## Claims

1. Method for developing a container enclosing a filling structure comprising a crystalline phase enclosing 55 to 97% by weight of xonotlite crystallites, 3 to 45% by weight of tobermorite crystallites, less than 15% by weight of intermediaries of the formula CaₓSi_{y}O_{z},w.H₂O with 1<x<16, 1<y<24, 4<z<60 and 1<w<18, of which less than 5% by weight of CaCO₃, and less than 5% by weight of SiO₂, said filling structure being consistent and said container having a discontinuous or continuous side gap between the inner surface of the metal casing thereof and the outer surface of the filling structure, **characterised in that** it comprises the following steps:
a) a step of hydrothermally synthesising the filling mass made from a mixture of quicklime and silica,
b) a step of inserting the filling mass coming from step a) into a container comprising a metal casing,
c) a step of cooling the filling mass coming from step b) by spraying a liquid or a gas taken at a temperature of between 15 and 25°C over at least part of the periphery of the container for a duration of between 30 seconds and 10 minutes so as to provide a discontinuous or continuous side gap between the inner surface of the metal casing and the outer surface of the filling mass,
d) a step of drying the filling mass coming from step c).

2. Method according to claim 1, **characterised in that** the cooling step is such that the continuous or discontinuous side gap is of a width of between 0.001 and 0.1mm, preferably between 0.001 and 0.05mm.

3. Method according to one of claims 1 or 2, **characterised in that** in step c), the water spraying carried out over the whole periphery of the container so as to provide a continuous side gap between the whole of the inner surface of the metal casing and the whole of the outer surface of the filling mass.

4. Method according to one of claims 1 to 3, **characterised in that** before step b) of inserting the filling mass, a degradable coating product is applied during the drying step over the whole of the inner surface of the metal casing of the container, so as to facilitate the arrangement of the side gap.

5. Method according to one of claims 1 to 4, **characterised in that** step a) of hydrothermal synthesis comprises:
(i) a sub-step of increasing the temperature, over a duration of less than 10 h, of an initial mixture of quicklime and silica at a temperature T1 of between 150 and 300°C,
(ii) a sub-step of producing the filling mass made:
- from the mixture of quicklime and silica coming from step (i),
- at a temperature T1 of between 150 and 300°C,
- at a pressure P1 of between 5.10⁵ Pa and 25.10⁵ Pa, and
- for a duration of between 10 h and 70 h;

6. Method according to one of claims 1 to 5, **characterised in that** the quicklime is obtained by calcination at a temperature of at least 850°C for at least one hour of limestone slabs such that at least 90% by weight have dimensions from 1 to 15mm, said limestone having a purity of at least 92% by weight and an open porosity going from 0 to 25%.

7. Method according to one of claims 1 to 6, **characterised in that** the drying step is carried out at a temperature of 300 to 450°C.
